# EUROPÄISCHE PATENTSCHRIFT

(11) **EP 4 240 993 B1**
(45) Veröffentlichungstag und Bekanntmachung des Hinweises auf die Patenterteilung: **12.03.2025**
(21) Anmeldenummer: 21802693.8
(22) Anmeldetag: 02.11.2021
(51) Int. Cl.: F16J 15/34

(54) **GLEITRINGDICHTUNGSANORDNUNG MIT VERBESSERTEM KÜHLVERHALTEN**
MECHANICAL-SEAL ARRANGEMENT WITH IMPROVED COOLING CHARACTERISTICS
AGENCEMENT DE JOINTS MÉCANIQUES AYANT DES CARACTÉRISTIQUES DE REFROIDISSEMENT AMÉLIORÉES

(30) Priorität: 05.11.2020 DE 102020129125
(43) Veröffentlichungstag der Anmeldung: 13.09.2023
(73) Patentinhaber: EagleBurgmann Germany GmbH & Co. KG, 82515 Wolfratshausen (DE)
(72) Erfinder: LEDIG, Stefan, 82343 Pöcking (DE); KUNTZ, Martin, 82008 Unterhaching (DE)
(74) Vertreter: Hoefer & Partner Patentanwälte mbB
(86) Internationale Anmeldenummer: PCT/EP2021/080329
(87) Internationale Veröffentlichungsnummer: WO 2022/096430

(56) Entgegenhaltungen:
- EP-A1- 0 790 446
- DE-A1- 102013 223 226
- GB-A- 2 286 020
- US-A- 5 217 234

## Beschreibung

Die vorliegende Erfindung betrifft eine Gleitringdichtungsanordnung mit einem verbesserten Kühlverhalten und insbesondere einem stationären Gleitring, welcher - zumindest teilweise - an einem Innenumfang und an einem Außenumfang umspült ist.

Gleitringdichtungsanordnungen sind aus dem Stand der Technik in unterschiedlichen Ausgestaltungen bekannt. Im Betrieb werden bei Gleitringdichtungsanordnungen häufig sog. Sperrfluidsysteme verwendet, welche neben einer Schmierung insbesondere auch einen Wärmeabtransport an den Gleitringdichtungen ausführen. Das Kühlen der Gleitringdichtung hat insbesondere die Aufgabe, ein Überhitzen im Betrieb mit möglichen Folgeschäden für die Gleitringdichtungsanordnung zu vermeiden. Für eine ausreichende Kühlung muss jedoch eine gewisse Förderleistung im Bereich der Gleitringdichtung ermöglicht werden. Das Sperr- oder Kühlfluid wird üblicherweise durch einen Einlass in den Bereich der Gleitringdichtung zugeführt und über einen Auslass abgeführt. Hierbei ist es bekannt, beispielsweise sog. Förderhülsen zu verwenden, welche durch ihre Rotation eine Bewegung des Kühlfluids vom Einlass zum Auslass unterstützen. Grundsätzlich besteht jedoch ein Bedarf, dass eine Kühlleistung kontinuierlich verbessert wird, um eine Lebensdauer und Leistungsfähigkeit einer Gleitringdichtungsanordnung weiter zu verbessern.

Ferner ist aus der EP 0 790 446 A1 eine Gleitringdichtungsanordnung gemäß dem Oberbegriff des Anspruchs 1 bekannt.

Es ist daher Aufgabe der vorliegenden Erfindung, eine Gleitringdichtungsanordnung bereitzustellen, welche bei einfachem Aufbau und einfacher, kostengünstiger Herstellbarkeit eine verbesserte Kühlwirkung ermöglicht.

Diese Aufgabe wird durch eine Gleitringdichtungsanordnung mit den Merkmalen des Anspruchs 1 gelöst. Die Unteransprüche zeigen bevorzugte Weiterbildungen der Erfindung.

Die erfindungsgemäße Gleitringdichtungsanordnung mit den Merkmalen des Anspruchs 1 weist demgegenüber den Vorteil auf, dass eine verbesserte Kühlwirkung ermöglicht wird. Dadurch kann eine Lebensdauer und insbesondere auch ein Verschleißverhalten der Gleitringdichtungsanordnung verbessert werden. Insbesondere kann durch eine Kombination mehrerer Modifikationen eine signifikante verbesserte Förderleistung und damit eine verbesserte Kühlung erreicht werden. Dies wird erfindungsgemäß dadurch erreicht, dass die Gleitringdichtungsanordnung eine erste und eine zweiten Gleitringdichtung aufweist. Jede der Gleitringdichtungen weist einen rotierenden und einen stationären Gleitring auf, welche zwischen sich einen Dichtspalt definieren. Ferner ist ein Gehäuse mit einem Einlass und einem Auslass für eine Kühlflüssigkeit vorgesehen. Weiterhin umfasst die Gleitringdichtungsanordnung eine rotierende Förderhülse, welche mit dem ersten rotierenden Gleitring der ersten Gleitringdichtung und dem zweiten rotierenden Gleitring der zweiten Gleitringdichtung verbunden ist. Die Förderhülse weist am Außenumfang eine Vielzahl von Fördernuten auf, so dass bei einer Rotation der Förderhülse Kühlflüssigkeit bewegt wird. Der erste stationäre Gleitring ist radial außerhalb der Förderhülse angeordnet. Dabei ist ein Innenumfang des ersten stationären Gleitrings der ersten Gleitringdichtung exzentrisch zu einem Außenumfang der Förderhülse angeordnet. Dadurch ergibt sich zwischen dem Außenumfang der Förderhülse und dem Innenumfang des ersten stationären Gleitrings ein umlaufender Exzenterspalt, durch welchen die Kühlflüssigkeit hindurchgefördert wird. Dadurch wird eine Fördergeschwindigkeit des geförderten Fluids deutlich erhöht. Weiterhin weist der erste stationären Gleitring an einer vom ersten Dichtspalt abgewandten Rückseite einen Schlitz und eine sich erweiternde Ausnehmung am Innenumfang auf. Die Ausnehmung mündet dabei in den Schlitz. Durch diese Maßnahme wird eine deutlich verbesserte Ausströmung des geförderten Fluids in den Auslass erreicht, so dass ein Wirkungsgrad der Förderhülse deutlich verbessert ist.

Weiter ist benachbart zur Rückseite des ersten stationären Gleitrings zwischen einem stationären Bauteil, beispielsweise einem Gehäuse, und dem Außenumfang des stationären Gleitrings ein Ringspalt ausgebildet. Dadurch wird an der vom ersten Dichtspalt abgewandten Seite des ersten Gleitrings eine Förderung sowohl am Innenumfang des stationären Gleitrings als auch am Außenumfang des stationären Gleitrings möglich. Dadurch wird eine Kühlung des stationären Gleitrings von zwei Umfangsseiten, d.h. innen und außen, im Bereich des an der Rückseite liegenden freien Endes des stationären Gleitrings möglich.

Weiter ist benachbart zur Rückseite des ersten stationären Gleitrings am Gehäuse eine zweite, sich erweiternde Ausnehmung ausgebildet, welche in den Auslass mündet. Somit öffnet sich der Ringspalt ebenfalls zum Auslass, so dass eine verbesserte Ausströmung des Fluids aus dem Ringspalt in den Auslass möglich ist. Dadurch kann ein Wirkungsgrad bei der Förderung der Kühlflüssigkeit weiter verbessert werden.

Gemäß einer weiteren bevorzugten Ausgestaltung der Erfindung ist die rotierende Förderhülse derart ausgebildet, dass die Förderhülse einen Aufnahmebereich zum Fixieren des ersten rotierenden Gleitrings der ersten Gleitringdichtung aufweist. Der Aufnahmebereich ist damit derart ausgebildet, dass der erste rotierende Gleitring zumindest teilweise umgriffen ist. Dadurch kann eine einfache und sichere Fixierung des ersten rotierenden Gleitrings an der Förderhülse ermöglicht werden.

Besonders bevorzugt ist eine Anzahl n von Fördernuten in der Förderhülse 12 ≤ n, und insbesondere in einem Bereich zwischen 18 ≤ n ≤ 24. Die Fördernuten laufen dabei vorzugsweise parallel zu einer Mittelachse der Gleitringdichtungsanordnung. Dadurch ist eine Herstellung der Fördernuten besonders einfach.

Vorzugsweise liegt die Rückseite des ersten stationären Gleitrings der ersten Gleitringdichtung radial innerhalb des Auslasses. Somit ist die Rückseite des ersten stationären Gleitrings unterhalb des Auslasses angeordnet, so dass die Rückseite des ersten stationären Gleitrings kontinuierlich von Kühlflüssigkeit umströmt ist.

Weiter bevorzugt liegt eine Mittellinie des Auslasses und die Rückseite des ersten stationären Gleitrings in einer gemeinsamen Ebene senkrecht zur Axialrichtung X-X. Somit ist eine Schattenprojektion des Auslasses auf den ersten stationären Gleitring derart, dass der Schatten teilweise auf dem ersten stationären Gleitring liegt. Besonders bevorzugt liegt die Rückseite des ersten stationären Gleitrings dabei auch in der Mitte des Einlasses.

Gemäß einer weiteren bevorzugten Ausgestaltung der Erfindung sind der Einlass und der Auslass im Gehäuse in Axialrichtung der Gleitringdichtungsanordnung zwischen der ersten und zweiten Gleitringdichtung angeordnet. Besonders bevorzugt liegen der Einlass und der Auslass dabei entlang des Umfangs der Gleitringdichtungsanordnung um 180° einander gegenüber. Ferner ist bevorzugt ein Durchmesser des Einlasses gleich einem Durchmesser des Auslasses.

Eine besonders strömungsgünstige Anordnung wird erreicht, wenn vorzugsweise der Einlass, der Auslass und der erste und zweite Schlitz koaxial zueinander angeordnet sind. Weiter bevorzugt sind dabei die Durchmesser von Einlass, Auslass und eine Breite von erstem und zweitem Schlitz gleich.

Um eine besonders gute Kühlwirkung an den Gleitringdichtungen zu erreichen, ist vorzugsweise ein Volumen der zweiten Ausnehmung im Gehäuse größer als ein Volumen der ersten Ausnehmung des ersten stationären Gleitrings.

Weiter bevorzugt weist der Ringspalt am Außenumfang des ersten stationären Gleitrings eine konstante Spaltbreite über den Umfang auf.

Vorzugsweise liegt die Exzentrizität zwischen der Förderhülse und dem ersten stationären Gleitring auf einer Waagerechten der Gleitringdichtungsanordnung. Alternativ liegt die Exzentrizität auf einer Geraden, welche in einem 45°-Winkel zur Waagerechten und einer Senkrechten liegt.

Um eine Kühlwirkung noch weiter zu verbessern und einen Wirkungsgrad der Förderhülse weiter zu steigern, ist vorzugsweise am ersten stationären Gleitring an der vom Dichtspalt abgewandten Rückseite ein zweiter Schlitz und eine dritte, sich verjüngende Ausnehmung am Innenumfang des ersten stationären Gleitrings vorgesehen. Die dritte, sich verjüngende Ausnehmung verjüngt sich dabei, ausgehend vom zweiten Schlitz in Richtung zum Exzenterspalt. Hierdurch wird eine bessere Einströmung des Fluids in den Exzenterspalt erreicht, wodurch eine Förderleistung und somit eine Kühlwirkung weiter verbessert werden kann.

Weiter bevorzugt ist am Gehäuse eine vierte, sich verjüngende Ausnehmung ausgebildet, welche sich ausgehend vom Einlass in Richtung zum Ringspalt zwischen dem Gehäuse und dem Außenumfang des ersten stationären Gleitrings verjüngt. Auch hierdurch können eine Förderleistung und somit eine Kühlleistung der Anordnung verbessert werden.

Bei Vorsehen der dritten und vierten Ausnehmung am zweiten Schlitz ist die Gleitringdichtungsanordnung auch drehrichtungsunabhängig betreibbar.

Besonders bevorzugt ist die Gleitringdichtungsanordnung eine vormontierte Baugruppe, so dass die Gleitringdichtungsanordnung als Kartusche an die abzudichtende Welle eingebaut werden kann. Hierdurch können insbesondere Fehler bei einer Vorort-Montage vermieden werden.

Nachfolgend wird unter Bezugnahme auf die begleitende Zeichnung ein bevorzugtes Ausführungsbeispiel der Erfindung im Detail beschrieben. In der Zeichnung ist:
- Fig. 1: eine schematische Schnittansicht einer Gleitringdichtungsanordnung gemäß einem ersten bevorzugten Ausführungsbeispiel der Erfindung,
- Fig. 2: eine schematische Querschnittsansicht entlang der Linie II-II von Fig. 1,
- Fig. 3: eine schematische, perspektivische, vergrößerte Schnittansicht der Gleitringdichtung von Fig. 1,
- Fig. 4: eine schematische, vergrößerte Querschnittsansicht der Gleitringdichtungsanordnung von Fig. 1 im Bereich des Auslasses,
- Fig. 5: eine schematische, perspektivische Ansicht einer Förderhülse der Gleitringdichtungsanordnung von Fig. 1, und
- Fig. 6: eine schematische Querschnittansicht einer Gleitringdichtungsanordnung gemäß einem zweiten bevorzugten Ausführungsbeispiel der Erfindung.

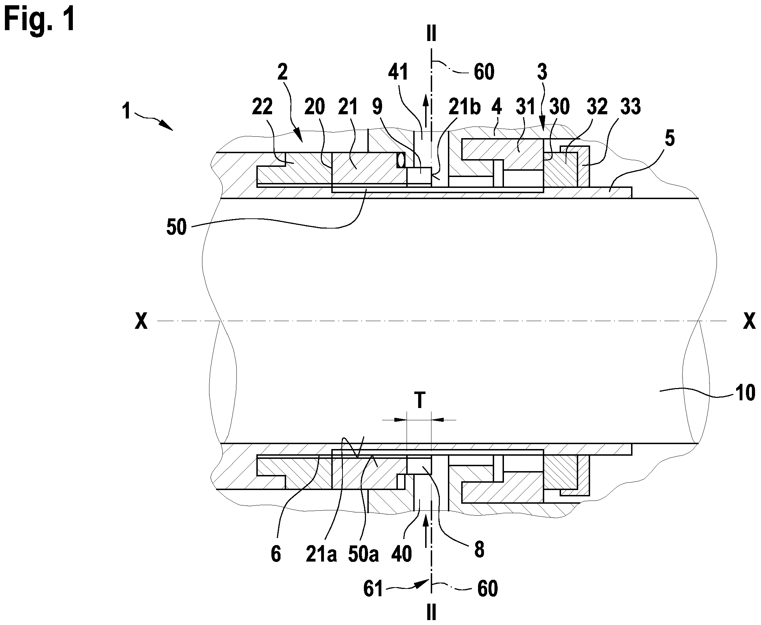

Nachfolgend wird unter Bezugnahme auf die Fig. 1 bis 5 eine Gleitringdichtungsanordnung 1 gemäß einem ersten bevorzugten Ausführungsbeispiel der Erfindung im Detail beschrieben.

Wie aus Fig. 1 ersichtlich ist, umfasst die Gleitringdichtungsanordnung 1 eine erste Gleitringdichtung 2 und eine zweite Gleitringdichtung 3. Die beiden Gleitringdichtungen 2, 3 sind in Axialrichtung X-X der Gleitringdichtungsanordnung in Reihe angeordnet.

Die Gleitringdichtungsanordnung 1 dichtet dabei an einer Welle 10 ab.

Die erste Gleitringdichtung 2 umfasst einen ersten stationären Gleitring 21, einen ersten rotierenden Gleitring 22 und einen Dichtspalt 20, welcher zwischen dem ersten stationären Gleitring 21 und dem ersten rotierenden Gleitring 22 angeordnet ist. Die zweite Gleitringdichtung 3 umfasst einen zweiten stationären Gleitring 31, einen zweiten rotierenden Gleitring 32 und einen Dichtspalt 30 zwischen dem zweiten stationären Gleitring 31 und dem zweiten rotierenden Gleitring 32.

Ferner umfasst die Gleitringdichtungsanordnung 1 ein Gehäuse 4, an welchem die stationären Gleitringe 21, 31 angeordnet sind. Wie weiter aus Fig. 1 ersichtlich ist, sind im Gehäuse 4 ein Einlass 40 und ein Auslass 41 für eine Kühlflüssigkeit vorgesehen. In diesem Ausführungsbeispiel sind der Einlass und der Auslass zylindrisch und einander um 180° entgegengesetzt an der Gleitringdichtungsanordnung 1 angeordnet. Dadurch liegen die Mittellinien 60 von Einlass 40 und Auslass 41 auf einer gemeinsamen Geraden.

Ferner umfasst die Gleitringdichtungsanordnung 1 eine rotierende Förderhülse 5. Die Förderhülse 5 ist mit dem ersten rotierenden Gleitring 22 und dem zweiten rotierenden Gleitring 32 verbunden. Hierbei ist der erste rotierende Gleitring 22 an einem Aufnahmebereich 51 der Förderhülse 5 teilweise von der Förderhülse 5 umgeben. Der zweite rotierende Gleitring 32 ist mittels eines Gleitringträgers 33 an der Förderhülse 5 fixiert.

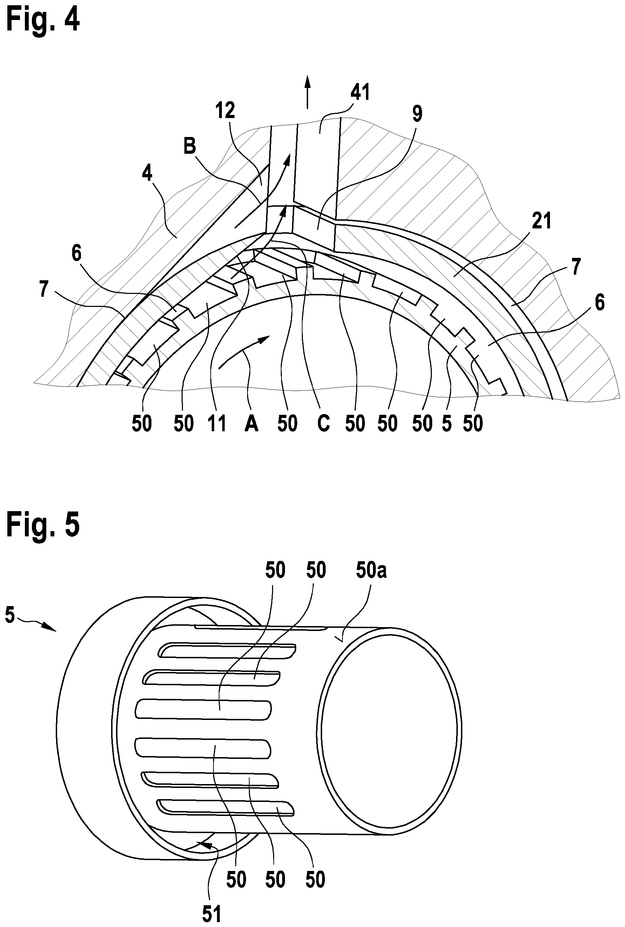

Die Förderhülse 5 ist im Detail aus Fig. 5 ersichtlich. Wie in Fig. 5 gezeigt, weist die Förderhülse 5 dabei eine Vielzahl von Fördernuten 50 auf, welche an einem Außenumfang 50a der Förderhülse 5 angeordnet sind. Die Fördernuten 5 sind parallel zur Axialrichtung X-X ausgebildet. Vorzugsweise ist eine Anzahl n der Fördernuten 50 größer oder gleich 12 und insbesondere zwischen 18 und 24 Fördernuten. In Fig. 5 ist ferner nochmals im Detail der Aufnahmebereich 51 der Förderhülse 5 dargestellt, an welchem der ersten rotierende Gleitring 21 fixiert ist.

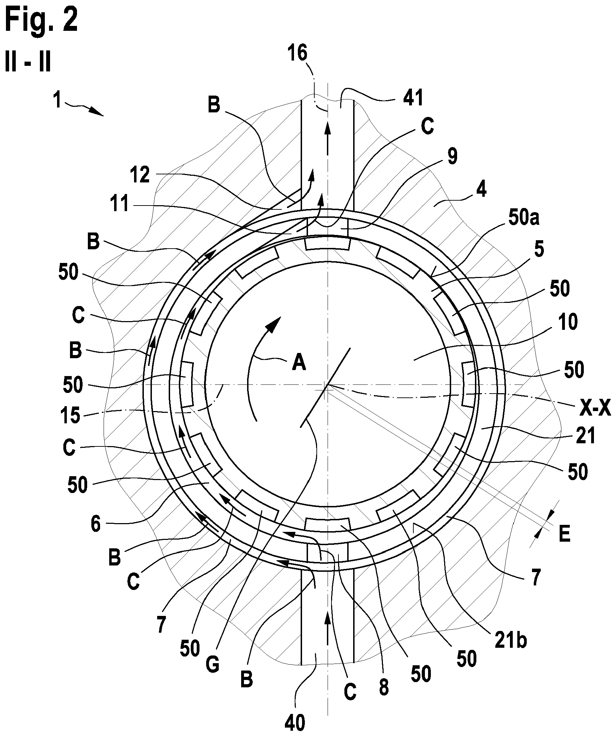

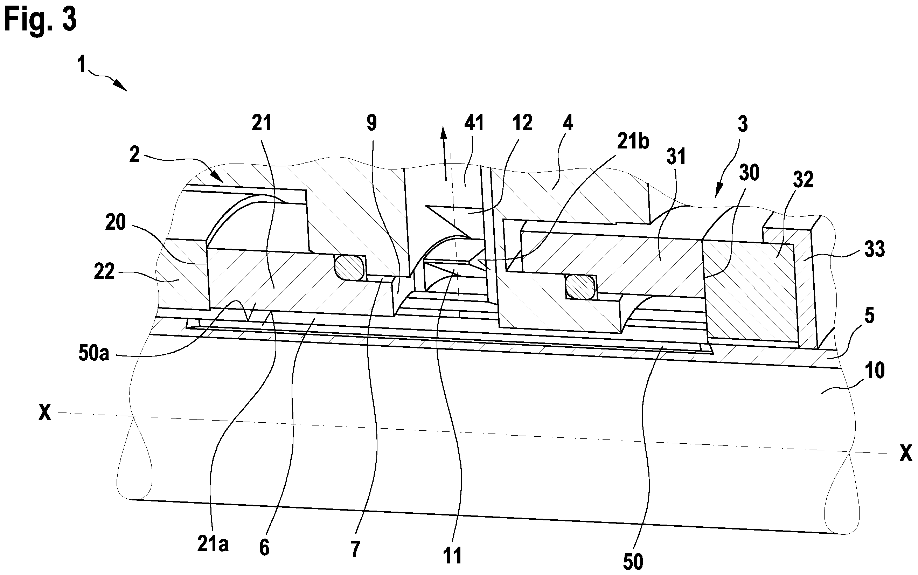

Wie insbesondere aus Fig. 2 ersichtlich ist, weist der erste stationären Gleitring 21 einen Innenumfang 21a auf, welcher exzentrisch zu einem Außenumfang 50a der Förderhülse 5 angeordnet ist. Dadurch ergibt sich ein umlaufender Exzenterspalt 6, welcher zwischen der Förderhülse 5 und dem ersten stationären Gleitring 21 an dessen vom Dichtspalt 20 abgewandten Rückseite 21b ausgebildet ist (vgl. Fig. 3).

Wie weiter insbesondere aus Fig. 2 ersichtlich ist, verjüngt sich der ringförmige Exzenterspalt 6 ausgehend vom Einlass 40 bis zum Auslass 41. Im Unterschied dazu bleibt ein Ringspalt 7 zwischen dem ersten stationären Gleitring 21 und dem Gehäuse 4 konstant (vgl. Fig. 2). Eine Exzentrizität E zwischen der Förderhülse 5 und dem ersten stationären Gleitring liegt dabei auf einer Geraden G, die in einem Winkel von 45° zu einer Waagerechten 15 und einer Senkrechten 16 der Gleitringdichtungsanordnung 1 ist.

Wie weiter aus den Fig. 2 und 3 ersichtlich ist, ist dabei an der Rückseite 21b des ersten stationären Gleitrings 21 ein erster Schlitz 9 und ein zweiter Schlitz 8 ausgebildet. Der erste Schlitz 9 ist koaxial mit dem Auslass 41 angeordnet und der zweite Schlitz 8 ist koaxial mit dem Einlass 40 angeordnet (vgl. Fig. 2).

Diese Schlitze 8, 9 weisen nur eine relativ geringe Tiefe T in Axialrichtung X-X auf (vgl. Fig. 1), so dass der erste stationäre Gleitring 21 seine Grundstabilität beibehält.

Die Mittellinien 60 des Einlasses 40 und des Auslasses 41 liegen mit der Rückseite 21b des ersten stationären Gleitrings in einer gemeinsamen Ebene 61, die senkrecht zur Axialrichtung X-X ist (vgl. Fig. 1).

Wie aus Fig. 2 ersichtlich ist, strömt somit Kühlfluid ausgehend vom Einlass 40 einerseits in den Ringspalt 7 und andererseits durch den zweiten Schlitz 8 in den umlaufenden Exzenterspalt 6. Durch die Rotation der Förderhülse 5 (Pfeil A in Fig. 2) wird die Kühlflüssigkeit dabei sowohl im Ringspalt 7 (Pfeile B), als auch im umlaufenden Exzenterspalt 6 (Pfeile C) in Richtung zum Auslass 41 gefördert.

Dabei ist, wie aus den Fig. 2 und 3 ersichtlich ist, am ersten stationären Gleitring 21 eine sich erweiternde Ausnehmung 11 ausgebildet. Am Gehäuse 4 ist am Austritt des Ringspaltes 7 zum Auslass 41 eine zweite sich erweiternde Ausnehmung 12 ausgebildet. Dadurch wird ein Strömungsverhalten des Fluids beim Austritt aus dem Ringspalt 7 bzw. dem ringförmigen Exzenterspalt 6 in den Auslass 41 deutlich verbessert, wodurch ein Wirkungsgrad bei der Förderung der Kühlflüssigkeit signifikant verbessert wird.

Der umlaufende Exzenterspalt 6 ist somit zwischen einem Innenumfang 21a des ersten stationären Gleitrings 21 und dem Außenumfang 50a der Förderhülse 5 ausgebildet. Fig. 4 zeigt nochmals im Detail den Austritt der Fluidströme (Pfeile B, C) aus dem Ringspalt 7 bzw. dem umlaufenden Exzenterspalt 6. Die beiden sich erweiternden Ausnehmungen 11, 12 führen die Kühlflüssigkeit dabei jeweils mit möglichst wenig Verlusten in den Auslass 41, so dass in Verbindung mit der Vielzahl von Fördernuten 50 in der Förderhülse 5 ein signifikant verbesserter Wirkungsgrad bei der Förderung erreicht werden kann.

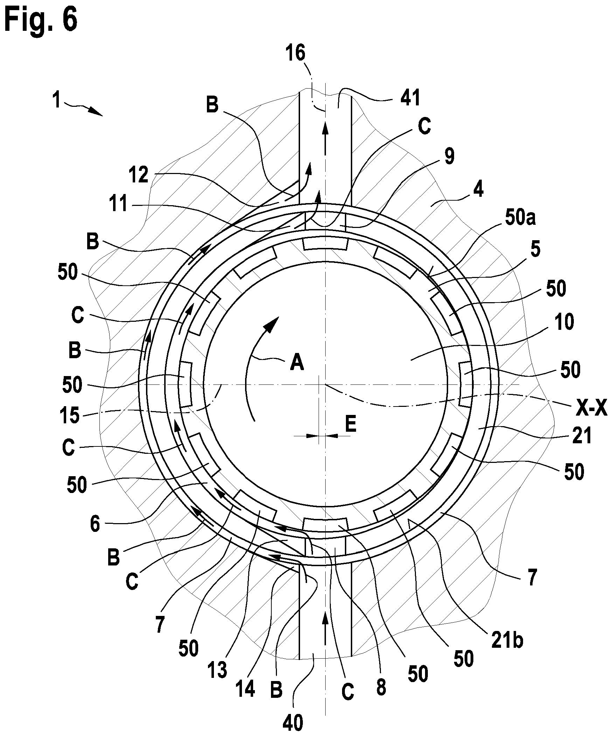

Nachfolgend wird unter Bezugnahme auf Fig. 6 eine Gleitringdichtungsanordnung gemäß einem zweiten bevorzugten Ausführungsbeispiel der Erfindung im Detail beschrieben. Gleiche bzw. funktional gleiche Teile sind mit den gleichen Bezugszeichen wie im ersten Ausführungsbeispiel bezeichnet.

Wie aus Fig. 6 ersichtlich ist, ist im Unterschied zum ersten Ausführungsbeispiel beim zweiten Ausführungsbeispiel auch eine Strömungsverbesserung am Einlass 40 der Gleitringdichtungsanordnung 1 vorgenommen. Hierbei ist eine dritte, sich verjüngende Ausnehmung 13 an der vom Dichtspalt abgewandten Rückseite 21b des ersten stationären Gleitrings 21 vorgesehen und eine vierte, sich verjüngende Ausnehmung 14 im Gehäuse 4 ausgebildet. Dabei ist, wie in Fig. 6 dargestellt, ein zweiter Schlitz 8 an der Rückseite 21b des ersten stationären Gleitrings 21 ausgebildet. Somit wird eine strömungsgünstige Zuführung des Fluids aus dem Einlass 40 möglich. Hierbei strömt das Fluid über die dritte, sich verjüngende Ausnehmung 13 in den Exzenterspalt 6 und aus dem Einlass 40 über die vierte, sich verjüngende Ausnehmung 14 in den Ringspalt 7. Ein weiterer Vorteil dieser Ausgestaltung liegt darin, dass die Gleitringdichtungsanordnung drehrichtungsunabhängig ist. D.h., wenn sich die Drehrichtung A umkehrt, wird der Auslass 41 zum Einlass und der Einlass 40 zum Auslass. Da nun spiegelbildlich an der Waagerechten 15 die erste, zweite, dritte und vierte Ausnehmung 11, 12, 13, 14 vorgesehen ist, kann dies problemlos ermöglicht werden. Ferner ist auch eine Exzentrizität E im Vergleich mit dem ersten Ausführungsbeispiel derart unterschiedlich, dass die Exzentrizität E durch eine Verschiebung auf der Waagerechten 15 aus der Mitte (Mittelachse X-X) vorgenommen wurde. Durch die so ausgeführte Exzentrizität E ergeben sich somit drehrichtungsunabhängig gleiche Kühlleistungen der Gleitringdichtungsanordnung 1.

Ansonsten entspricht dieses Ausführungsbeispiel dem vorhergehenden Ausführungsbeispiel, so dass auf die dort gegebene Beschreibung verwiesen werden kann.

Somit kann erfindungsgemäß eine Gleitringdichtungsanordnung 1 bereitgestellt werden, welche eine signifikant verbesserte Kühlwirkung durch Vorsehen einer Kombination von mehreren Maßnahmen an der Gleitringdichtungsanordnung ermöglicht. Insbesondere das Vorsehen der Förderhülse 5 mit Fördernuten 50 sowie die erste und zweite sich erweiternde Ausnehmung 11, 12 am Gehäuse bzw. am ersten stationären Gleitring 21 verbessern das Kühlverhalten der Gleitringdichtungsanordnung deutlich. Eine weitere Verbesserung wird durch das Vorsehen der dritten und vierten Ausnehmungen 13, 14 erreicht, wodurch die Gleitringdichtungsanordnung auch in beiden Drehrichtungen betrieben werden kann. Insbesondere ermöglicht die verbesserte Kühlwirkung der Gleitringdichtungsanordnung, dass diese auch zur Abdichtung von Medien eingesetzt werden kann, welche hohe bis sehr hohe Temperaturen aufweisen können, ohne dass die Gleitringdichtungsanordnung dadurch beschädigt wird.

### Bezugszeichenliste

- 1: Gleitringdichtungsanordnung
- 2: erste Gleitringdichtung
- 3: zweite Gleitringdichtung
- 4: Gehäuse
- 5: Förderhülse
- 6: ringförmiger Exzenterspalt
- 7: Ringspalt
- 8: zweiter Schlitz
- 9: erster Schlitz
- 10: Welle
- 11: erste erweiternde Ausnehmung am ersten stationären Gleitring
- 12: zweite erweiternde Ausnehmung am Gehäuse
- 13: dritte sich verjüngende Ausnehmung
- 14: vierte sich verjüngende Ausnehmung
- 15: Waagerechte
- 16: Senkrechte
- 20: erster Dichtspalt
- 21: erster stationärer Gleitring
- 21a: Innenumfang des ersten stationären Gleitrings
- 21b: Rückseite des ersten stationären Gleitrings
- 22: erster rotierenden Gleitring
- 30: Dichtspalt
- 31: zweiter stationärer Gleitring
- 32: zweiter rotierender Gleitring
- 33: Gleitringträger
- 40: Einlass
- 41: Auslass
- 50: Fördernuten
- 50a: Außenumfang der Förderhülse
- 51: Aufnahmebereich an der Förderhülse
- 60: Mittellinie von Einlass und Auslass
- 61: Ebene
- E: Exzentrizität
- G: 45°-Gerade
- T: Tiefe des ersten und zweiten Schlitzes
- X-X: Axialrichtung der Gleitringdichtungsanordnung

## Patentansprüche

1. Gleitringdichtungsanordnung, umfassend:
- eine erste Gleitringdichtung (2) mit einem ersten rotierenden Gleitring (22) und einem ersten stationären Gleitring (21), welche zwischen sich einen ersten Dichtspalt (20) definieren,
- eine zweite Gleitringdichtung (3) mit einem zweiten rotierenden Gleitring (22) und einem zweiten stationären Gleitring (32), welche zwischen sich einen zweiten Dichtspalt (30) definieren,
- ein Gehäuse (4) mit einem Einlass (40) und einem Auslass (41) für eine Kühlflüssigkeit,
- eine rotierende Förderhülse (5), welche mit dem ersten rotierenden Gleitring (22) und dem zweiten rotierenden Gleitring (32) verbunden ist,
- wobei die Förderhülse (5) an ihrem Außenumfang eine Vielzahl von Fördernuten (50) aufweist,
- wobei der erste stationäre Gleitring (21) radial außerhalb der Förderhülse (5) angeordnet ist und einen Innenumfang (21a) aufweist, welcher exzentrisch zu einem Außenumfang (50a) der Förderhülse (5) angeordnet ist, so dass zwischen dem Außenumfang (50a) der Förderhülse (5) und dem Innenumfang (21a) des ersten stationären Gleitrings (21) ein umlaufender Exzenterspalt (6) ausgebildet ist, **dadurch gekennzeichnet, dass**
- der erste stationäre Gleitring (21) an einer vom ersten Dichtspalt (20) abgewandten Rückseite (21b) einen zum Auslass (41) gerichteten ersten Schlitz (9) und eine erste sich erweiternde Ausnehmung (11) am Innenumfang (21a) aufweist, welche in den ersten Schlitz (9) mündet,
- wobei benachbart zur Rückseite (21b) des ersten stationären Gleitrings (21) zwischen dem Gehäuse (4) und dem Außenumfang des ersten stationären Gleitrings (21) ein Ringspalt (7) ausgebildet ist, und
- wobei am Gehäuse (4) eine zweite sich erweiternde Ausnehmung (12) ausgebildet ist, welche vom Ringspalt (7) in den Auslass (41) mündet.

2. Gleitringdichtungsanordnung nach Anspruch 1, wobei die Förderhülse (5) einen Aufnahmebereich (51) zur Fixierung des ersten rotierenden Gleitrings (22) aufweist.

3. Gleitringdichtungsanordnung nach einem der vorhergehenden Ansprüche, wobei eine Anzahl n der Fördernuten (50) der Förderhülse (5) größer oder gleich 12 ist und insbesondere zwischen 18 ≤ n ≤ 24 ist.

4. Gleitringdichtungsanordnung nach einem der vorhergehenden Ansprüche, wobei die Rückseite (21b) des ersten stationären Gleitrings (21) radial innerhalb des Auslasses (41) liegt.

5. Gleitringdichtungsanordnung nach Anspruch 4, wobei eine Mittellinie des Auslasses (41) und die Rückseite (21b) des ersten stationären Gleitrings (21) in einer gemeinsamen Ebene (61) liegen, die senkrecht zur Axialrichtung (X-X) der Gleitringdichtungsanordnung ist.

6. Gleitringdichtungsanordnung nach einem der vorhergehenden Ansprüche, wobei der Einlass (40) und der Auslass (41) in Axialrichtung (X-X) der Gleitringdichtungsanordnung zwischen der erste Gleitringdichtung (2) und der zweiten Gleitringdichtung (3) angeordnet sind.

7. Gleitringdichtungsanordnung nach einem der vorhergehenden Ansprüche, wobei der Einlass (40) und der Auslass (41) am Umfang der Gleitringdichtungsanordnung einander um 180° gegenüberliegen.

8. Gleitringdichtungsanordnung nach einem der vorhergehenden Ansprüche, wobei ein Volumen der zweiten sich erweiternden Ausnehmung (12) am Gehäuse (4) größer ist als ein Volumen der ersten sich erweiternden Ausnehmung (11) am ersten stationären Gleitring (21).

9. Gleitringdichtungsanordnung nach einem der vorhergehenden Ansprüche, wobei der Ringspalt (7) entlang seines Umfangs eine konstante Spaltbreite aufweist.

10. Gleitringdichtungsanordnung nach einem der vorhergehenden Ansprüche, wobei die Exzentrizität (E) zwischen der Förderhülse (5) und dem ersten stationären Gleitring (21) auf einer Waagerechten (15) der Gleitringdichtungsanordnung liegt.

11. Gleitringdichtungsanordnung nach einem der vorhergehenden Ansprüche, wobei der erste stationäre Gleitring (21) an der vom Dichtspalt (20) abgewandten Rückseite (21b) einen zweiten Schlitz (8) und eine dritte, sich verjüngende Ausnehmung (13) am Innenumfang aufweist, welche sich ausgehend vom zweiten Schlitz (8) in Richtung zum Exzenterspalt (6) verjüngt.

12. Gleitringdichtungsanordnung nach Anspruch 11, wobei am Gehäuse eine vierte, sich verjüngende Ausnehmung (14) ausgebildet ist, welche sich ausgehend vom Einlass (40) in den Ringspalt (7) verjüngt.

13. Gleitringdichtungsanordnung nach einem der vorhergehenden Ansprüche, wobei die Gleitringdichtungsanordnung eine vormontierbare Baugruppe ist.

## Claims

1. A mechanical seal arrangement comprising:
- a first mechanical seal (2) comprising a first rotating sliding ring (22) and a first stationary sliding ring (21) defining a first sealing gap (20) therebetween,
- a second mechanical seal (3) having a second rotating sliding ring (22) and a second stationary sliding ring (32) defining a second seal gap (30) therebetween,
- a housing (4) with an inlet (40) and an outlet (41) for a cooling liquid,
- a rotating conveying sleeve (5) which is joined to the first rotating sliding ring (22) and the second rotating sliding ring (32)
- said conveying sleeve (5) having a plurality of conveying grooves (50) on its outer circumference,
- wherein the first stationary sliding ring (21) is arranged radially outside the conveying sleeve (5) and has an inner circumference (21a) which is eccentric to an outer circumference (50a) of the conveying sleeve (5) so that a circumferential eccentric gap (6) is formed between the outer circumference (50a) of the conveying sleeve (5) and the inner circumference (21a) of the first stationary sliding ring (21), **characterized in in that**
- the first stationary sliding ring (21), on a rear side (21b) facing away from the first sealing gap (20), has a first slot (9) directed towards the outlet (41) and a first widening recess (11) on the inner circumference (21a), which recess opens into the first slot (9),
- wherein an annular gap (7) is formed adjacent to the rear side (21b) of the first stationary sliding ring (21) between the housing (4) and the outer circumference of the first stationary sliding ring (21), and.
- wherein a second widening recess (12) is formed on the housing (4), which recess opens from the annular gap (7) into the outlet (41).

2. The mechanical seal arrangement according to claim 1, wherein the conveying sleeve (5) has a receiving region (51) for fixing the first rotating sliding ring (22).

3. The mechanical seal arrangement according to one of the preceding claims, wherein a number n of the conveying grooves (50) of the conveying sleeve (5) is greater than or equal to 12 and in particular is between 18 ≤ n ≤ 24.

4. The mechanical seal arrangement according to one of the preceding claims, wherein the rear side (21b) of the first stationary sliding ring (21) is located radially inside the outlet (41).

5. The mechanical seal arrangement according to claim 4, wherein a center line of the outlet (41) and the back side (21b) of the first stationary sliding ring (21) lie in a common plane (61) which is perpendicular to the axial direction (X-X) of the mechanical seal arrangement.

6. The mechanical seal arrangement according to one of the preceding claims, wherein the inlet (40) and the outlet (41) are arranged in the axial direction (X-X) of the mechanical seal arrangement between the first mechanical seal (2) and the second mechanical seal (3).

7. The mechanical seal arrangement according to one of the preceding claims, wherein the inlet (40) and the outlet (41) are opposite each other by 180° at the circumference of the mechanical seal arrangement.

8. The mechanical seal arrangement according to one of the preceding claims, wherein a volume of the second widening recess (12) on the housing (4) is larger than a volume of the first widening recess (11) on the first stationary sliding ring (21).

9. The mechanical seal arrangement according to one of the preceding claims, wherein the annular gap (7) has a constant gap width along its circumference.

10. The mechanical seal arrangement according to one of the preceding claims, wherein the eccentricity (E) between the conveying sleeve (5) and the first stationary sliding ring (21) is located on a horizontal line (15) of the mechanical seal arrangement.

11. The mechanical seal arrangement according to one of the preceding claims, wherein the first stationary sliding ring (21) has a second slot (8) on the rear side (21b) facing away from the sealing gap (20) and a third, tapered recess (13) on the inner circumference, which, starting from the second slot (8), tapers in the direction of the eccentric gap (6).

12. The mechanical seal arrangement according to claim 11, wherein a fourth tapered recess (14) is formed on the housing, which tapers from the inlet (40) into the annular gap (7).

13. The mechanical seal arrangement according to one of the preceding claims, wherein the mechanical seal arrangement is a pre-assemblable assembly.

## Revendications

1. Ensemble de garnitures mécaniques d'étanchéité comprenant :
- une première garniture mécanique d'étanchéité (2) avec un premier anneau de glissement rotatif (22) et un premier anneau de glissement stationnaire (21), lesquels définissent entre eux une première fente d'étanchéité (20),
- une deuxième garniture mécanique d'étanchéité (3) avec un deuxième anneau de glissement rotatif (22) et un deuxième anneau de glissement stationnaire (32), lesquels définissent entre eux une deuxième fente d'étanchéité (30),
- un boîtier (4) avec une entrée (40) et une sortie (41) pour un liquide de refroidissement,
- un manchon de refoulement (5) rotatif, qui est relié au premier anneau de glissement rotatif (22) et au deuxième anneau de glissement rotatif (32),
- dans lequel le manchon de refoulement (5) présente sur sa périphérie extérieure une pluralité de rainures de refoulement (50),
- dans lequel le premier anneau de glissement stationnaire (21) est disposé radialement à l'extérieur du manchon de refoulement (5) et présente une périphérie intérieure (21a) qui est disposée de manière excentrique par rapport à une périphérie extérieure (50a) du manchon de refoulement (5) de telle sorte qu'une fente excentrique (6) périphérique est réalisée entre la périphérie extérieure (50a) du manchon de refoulement (5) et la périphérie intérieure (21a) du premier anneau de glissement stationnaire (21), **caractérisé en ce que**
- le premier anneau de glissement stationnaire (21) présente une première entaille (9) orientée vers la sortie (41) sur une face arrière (21b) opposée à la première fente d'étanchéité (20) et un premier évidement (11) s'élargissant sur la périphérie intérieure (21a), qui débouche dans la première entaille (9),
- dans lequel une fente annulaire (7) est réalisée de manière adjacente à la face arrière (21b) du premier anneau de glissement stationnaire (21) entre le boîtier (4) et la périphérie extérieure du premier anneau de glissement stationnaire (21), et
- dans lequel est réalisé sur le boîtier (4) un deuxième évidement (12) s'élargissant, lequel débouche depuis la fente annulaire (7) dans la sortie (41).

2. Ensemble de garnitures mécaniques d'étanchéité selon la revendication 1, dans lequel le manchon de refoulement (5) présente une zone de réception (51) pour la fixation du premier anneau de glissement rotatif (22).

3. Ensemble de garnitures mécaniques d'étanchéité selon l'une quelconque des revendications précédentes, dans lequel un nombre n des rainures de refoulement (50) du manchon de refoulement (5) est supérieur ou égal à 12 et est en particulier compris entre 18 ≤ n ≤ 24.

4. Ensemble de garnitures mécaniques d'étanchéité selon l'une quelconque des revendications précédentes, dans lequel la face arrière (21b) du premier anneau de glissement stationnaire (21) se situe radialement à l'intérieur de la sortie (41).

5. Ensemble de garnitures mécaniques d'étanchéité selon la revendication 4, dans lequel une ligne centrale de la sortie (41) et la face arrière (21b) du premier anneau de glissement stationnaire (21) se situent dans un plan commun (61) qui est perpendiculaire à la direction axiale (X-X) de l'ensemble de garnitures mécaniques d'étanchéité.

6. Ensemble de garnitures mécaniques d'étanchéité selon l'une quelconque des revendications précédentes, dans lequel l'entrée (40) et la sortie (41) sont disposées dans la direction axiale (X-X) de l'ensemble de garnitures mécaniques d'étanchéité entre la première garniture mécanique d'étanchéité (2) et la deuxième garniture mécanique d'étanchéité (3).

7. Ensemble de garnitures mécaniques d'étanchéité selon l'une quelconque des revendications précédentes, dans lequel l'entrée (40) et la sortie (41) se font face l'une à l'autre à 180° sur la périphérie de l'ensemble de garnitures mécaniques d'étanchéité.

8. Ensemble de garnitures mécaniques d'étanchéité selon l'une quelconque des revendications précédentes, dans lequel un volume du deuxième évidement (12) s'élargissant sur le boîtier (4) est supérieur à un volume du premier évidement (11) s'élargissant sur le premier anneau de glissement stationnaire (21).

9. Ensemble de garnitures mécaniques d'étanchéité selon l'une quelconque des revendications précédentes, dans lequel la fente annulaire (7) présente une largeur de fente constante le long de sa périphérie.

10. Ensemble de garnitures mécaniques d'étanchéité selon l'une quelconque des revendications précédentes, dans lequel l'excentricité (E) entre le manchon de refoulement (5) et le premier anneau de glissement stationnaire (21) se situe à l'horizontale (15) de l'ensemble de garnitures mécaniques d'étanchéité.

11. Ensemble de garnitures mécaniques d'étanchéité selon l'une quelconque des revendications précédentes, dans lequel le premier anneau de glissement stationnaire (21) présente sur la face arrière (21b) opposée à la fente d'étanchéité (20) une deuxième entaille (8) et un troisième évidement (13) se rétrécissant sur la périphérie intérieure, lequel se rétrécit en partant de la deuxième entaille (8) en direction de la fente excentrique (6).

12. Ensemble de garnitures mécaniques d'étanchéité selon la revendication 11, dans lequel est réalisé sur le boîtier un quatrième évidement (14) se rétrécissant, lequel se rétrécit en partant de l'entrée (40) dans la fente annulaire (7).

13. Ensemble de garnitures mécaniques d'étanchéité selon l'une quelconque des revendications précédentes, dans lequel l'ensemble de garnitures mécaniques d'étanchéité est un ensemble pouvant être prémonté.
